# EUROPÄISCHE PATENTSCHRIFT

(11) **EP 3 038 859 B1**
(45) Veröffentlichungstag und Bekanntmachung des Hinweises auf die Patenterteilung: **22.03.2017**
(21) Anmeldenummer: 14755400.0
(22) Anmeldetag: 26.08.2014
(51) Int. Cl.: B60P 7/15, E04G 25/04, E04H 15/32

(54) **TELESKOPIERBARE VORRICHTUNG**
TELESCOPIC DEVICE
DISPOSITIF TÉLESCOPIQUE

(30) Priorität: 27.08.2013 DE 202013103876 U
(43) Veröffentlichungstag der Anmeldung: 06.07.2016
(73) Patentinhaber: Thule NV, 8930 Menen (BE)
(72) Erfinder: BROWAEYS, Wouter, B-8560 Wevelgem (BE); LERNOUT, Wim, B-8930 Menen (BE); KRONBORG, Niklas, S-214 31 Malmö (SE)
(74) Vertreter: Wallentin, Lars
(86) Internationale Anmeldenummer: PCT/EP2014/068088
(87) Internationale Veröffentlichungsnummer: WO 2015/028467

(56) Entgegenhaltungen:
- CA-A- 616 129
- US-A- 5 104 269
- US-A- 5 848 629
- US-A- 5 988 963
- US-A- 6 062 782

## Beschreibung

Die Erfindung betrifft eine Anordnung für ein Campingfahrzeug mit einer Markise und einer teleskopierbaren Vorrichtung und ein Campingfahrzeug mit einer solchen Anordnung.

Derartige teleskopierbare Vorrichtungen dienen dazu, Dachkonstruktionen mit einer spannbaren Plane bzw. Markise, derart zu versteifen, dass die Plane eine geneigte Fläche ohne Senken aufweist. Durch Anordnen einer oder mehrerer teleskopierbarer Vorrichtungen zwischen einem aufrollbaren Ende der Plane und einem freien kann die Plane bzw. Markise zwischen ihren beiden Enden gespannt werden. Auf diese Weise kann ein Abfließen von Regenwasser entlang der gespannten und auch geneigten Plane gewährleistet werden, ohne dass in Senken innerhalb der Fläche der Plane Wasser gestaut wird.

Aus dem Stand der Technik bekannte teleskopierbare Vorrichtungen weisen ein inneres und ein äußeres Element auf, die zueinander teleskopierbar sind, indem das innere Element im Inneren des äußeren geführt wird. Zwischen den beiden Elementen ist eine Rastvorrichtung angeordnet, die an dem inneren Element befestigt ist. Die Rastvorrichtung weist einen Federstift oder eine mit einer Feder gespannte Kugel auf, die in Aussparungen bzw. Rastpunkte eingreifen können, die im äußeren Element angeordnet sind. Durch Teleskopieren bzw. durch Ausziehen des inneren Elements aus dem äußeren wird eine freie Bewegung der beiden Elemente zueinander solange erlaubt, bis der Federstift bzw. die Kugel in einer der Aussparungen einrastet und somit eine weitere relative Bewegung der beiden Elemente verhindert.

Ferner ist aus dem Stand der Technik bekannt, zum Beispiel aus der US 5,848,629 A, dass eine teleskopierbare Vorrichtung zum Spannen einer Markise mit zwei Elementen, die relativ zueinander beweglich sind, mittels eines Drehmechanismus zueinander verspannbar sind. Der Drehmechanismus ist derart ausgebildet, dass er die relative Bewegung der beiden Elemente zueinander sperrt.

Bei den vorgestellten Lösungen aus dem Stand der Technik zum Spannen einer Dachkonstruktion mit einer Plane bzw. mit einer Markise für beispielsweise einen Wohnwagen beziehungsweise für ein Campingfahrzeug wird ein hohes Maß an Muskelkraft benötigt, um die Plane zu spannen.

Wie bereits erwähnt, wird eine teleskopierbare Vorrichtung zwischen einem aufrollbarem Ende und einem freien Ende der Markise angeordnet, um die beiden Ende derart zu verspannen, dass Regenwasser entlang der gespannten und geneigten Plane abfließt.

Um jedoch mittels einer teleskopierbaren Vorrichtung aus dem Stand der Technik eine Markise zu spannen, muss ein Nutzer mehrere Aufgaben zugleich erledigen. Zum einen muss die Vorrichtung derart an der Markise angebracht werden, dass diese entlang der Ausfahrrichtung der Markise angeordnet ist. Hierbei wird ein Ende der Vorrichtung gegen beispielsweise das Campingfahrzeug und das andere Ende gegen das freie Ende der Markise gespannt. Um eine möglichst hohe Spannkraft zu erreichen, die die Plane bzw. die Markise spannt, müssen mit Muskelkraft die beiden Elemente der telekopierbaren Vorrichtung in entgegengesetzte Richtungen gedrückt werden. Durch das Auseinanderdrücken wird zunächst eine erste Rastposition erreicht beziehungsweise die Vorrichtung in einer ersten Position durch Verdrehen gesichert. In der Regel ist es danach notwendig, die telekopierbare Vorrichtung zu lösen und erneut bzw. nachzuspannen.

Aufgrund der Tatsache, dass sowohl das Spannen der Markise bzw. der Plane mittels der teleskopierbaren Vorrichtung als auch das Halten des Eigengewichts der Vorrichtung, das Nachspannen sowie das eventuelle Verdrehen zur Sicherung Muskelkraft benötigt, gestaltet sich ein straffes Spannen mittels derartiger Vorrichtungen als schwer durchführbar. Insbesondere können Personen höheren Alters keine ausreichende Muskelkraft zum Spannen aufbringen.

Daher ist es Aufgabe der vorliegenden Erfindung, eine teleskopierbare Vorrichtung so auszubilden, dass diese einen Mechanismus aufweist, der unter geringem Einsatz von Muskelkraft das Verschieben der Enden der Vorrichtung in entgegengesetzte Richtungen ermöglicht.

Die vorgenannte Aufgabe wird erfindungsgemäß durch die Merkmale des unabhängigen Anspruchs gelöst.

Weitere vorteilhafte Ausführungsbeispiele der vorliegenden Erfindung sind Gegenstand der Unteransprüche.

Erfindungsgemäß ist eine Anordnung mit einer Markise und einer teleskopierbaren Vorrichtung vorgesehen. Die Markise weist ein freies Ende und ein aufrollbares Ende auf. Die teleskopierbare Vorrichtung, beispielsweise ein Spannsparren, dient zum Verspannen des freien Endes und des aufrollbaren Endes der Markise gegeneinander. Ferner weist die teleskopierbare Vorrichtung ein erstes Element und ein zweites Element auf, die relativ zueinander teleskopierbar sind. Dabei ist es günstig, wenn die beiden Elemente koaxial zueinander einsteckbar sind. Dies erlaubt auf einfache Weise das Einschieben des einen Elements in das andere. Ferner ist es günstig, wenn die zwei koaxial einsteckbaren Elemente mindestens eine Sicherung aufweisen, die es verhindert, dass die Elemente der Vorrichtung voneinander z.B. während des Transports lösbar sind. Somit kann ein ungewolltes Auseinanderfahren der teleskopierbaren Vorrichtung vermieden werden.

Des Weiteren ist es günstig, wenn das erste Element und das zweite Element ein rohrförmiges Profil aufweisen, vorzugsweise mit einem quadratischen, rechteckigen, runden oder elliptischen Querschnitt. Auch ist es möglich, dass das Profil einen polygonen oder aber einen beliebigen Querschnitt aufweist. Rohrförmige bzw. hohlzylindrische Profile mit einem verdrehsicheren Querschnitt wie z. B. einem quadratischen, rechteckigen oder einem elliptischen Querschnitt sind bevorzugt, da dadurch die Orientierung von zwei teleskopierbaren Elemente zueinander gesichert ist. Dies gewährleistet auf einfache Weise ein sicheres Zusammenwirken von Mechanismen zwischen den beiden Elementen.

Ferner ist es günstig, wenn die Vorrichtung ein Eingriffsmittel aufweist, das an dem zweiten Element angeordnet ist. Somit kann ein Gegenstück, wie z.B. ein Hebel in das Eingriffsmittel eingreifen bzw. mit dem zweiten Element wechselwirken.

Bevorzugterweise weist die teleskopierbare Vorrichtung eine Positioniervorrichtung auf, die an dem ersten Element angeordnet ist. Mithilfe der Positioniervorrichtung ist es auf einfache Weise möglich, die Enden der teleskopierbaren Vorrichtung, ein Ende am ersten Element und ein Ende am zweiten Element, gegeneinander zu verspannen.

Idealerweise weist die Positioniervorrichtung ein Verschiebemittel und ein Klemmmittel auf. Somit wird gewährleistet, dass die Positioniervorrichtung mittels des Verschiebemittels beispielsweise entlang eines der Elemente verschoben werden kann und nach dem Verschieben beziehungsweise auch während des Verschiebens durch ein Klemmmittel gesichert werden kann. Das Klemmmitteln verhindert also günstigerweise eine Bewegung entgegen der Verschieberichtung.

Bevorzugterweise kann die Positioniervorrichtung so in Wirkeingriff mit dem Eingriffsmittel gebracht werden, dass idealerweise durch Betätigung des Verschiebemittels der Positioniervorrichtung eine Druckkraft erzeugt wird, mithilfe der das erste Element relativ zu dem zweiten Element ausfahrbar ist, wobei bei Betätigung des Verschiebemittels dieses mit dem Eingriffsmittel in Eingriff gelangt. Demzufolge können durch das Betätigen des Verschiebemittels die Enden der teleskopierbaren Vorrichtung in entgegengesetzte Richtungen gedrückt werden, wobei sich das erste Element relativ zu dem zweiten Element bewegt bzw. das erste Element vorzugsweise aus dem zweiten Element ausfährt. Diese Ausfahrbewegung wird günstigerweise durch die Betätigung des Verschiebemittels erreicht, wobei das Verschiebemittel mit dem Eingriffsmittel zusammenwirkt, um eine Relativbewegung zwischen beiden Elementen zu realisieren. Mit anderer Worten ausgedrückt, wird günstigerweise durch das Zusammenwirken von Verschiebemittel, das an dem ersten Element angeordnet ist, und dem Eingriffsmittel, das an dem zweiten Element angeordnet ist, das eine Element aus dem anderen ausgefahren, wobei sich die Gesamtlänge der teleskopierbaren Vorrichtung erhöht.

Idealerweise ist durch das Klemmmittel das Einfahren des ersten Elements relativ zu dem zweiten Element verhinderbar, wobei das Klemmmittel zur Arretierung der Positioniervorrichtung mit dem Eingriffsmittel zusammenwirkt. Dadurch wird, wie bereits oben angedeutet, eine Bewegung entgegen der Verschieberichtung verhindert, sodass der durch das Verschiebemittel erzeugte Druck beziehungsweise die dadurch erzeugte Druckkraft bzw. der zurückgelegte Weg zwischen den Enden der Positioniervorrichtung aufrechterhalten werden kann. Mithilfe der Klemmvorrichtung kann die Druckkraft auch dann aufrechterhalten werden, wenn das Verschiebemitteln nicht im Eingriff mit dem Eingriffsmittel steht. Folglich ist die Bewegung entgegen der Verschieberichtung gesperrt, wobei die erzeugte Druckkraft bzw. die Gesamtlänge der teleskopierbaren Vorrichtung erhalten bleibt.

Bevorzugterweise ist bei Lösen der Positioniervorrichtung das erste Element entlang des zweiten Elements frei bewegbar, vorteilhafterweise während der Wirkeingriff im Eingriffsmittel von Verschiebemittel und Klemmmittel gelöst ist. Erst durch Lösen des Wirkeingriffs beider Mittel beziehungsweise des Verschiebe- und des Klemmmittels ist der Positioniervorrichtung eine Bewegung entgegen der Verschieberichtung möglich. Somit kann die Druckkraft, hervorgerufen durch das Ausfahren eines Elements aus dem anderen, verringert werden. Anders ausgedrückt wird es durch Lösen des Wirkeingriffs möglich, die teleskopierbare Vorrichtung beziehungsweise das erste und das zweite Element relativ zueinander einzufahren.

Idealerweise weist die Positioniervorrichtung eine Aufnahme zumindest zum Halten von Verschiebe- und Klemmmittel auf, in der günstigerweise das Verschiebe- und das Klemmmittel angeordnet sind. Vorteilhafterweise ist die Aufnahme zumindest teilweise innerhalb des ersten Elements angeordnet. Auch kann die Aufnahme im Inneren des zweiten Elementes angeordnet sein. Somit ist eine einfache und stabile Verbindung der Aufnahme an dem ersten Element möglich, wobei der Ort der Anbringung am Element beliebig wählbar ist. Auch kann durch Anordnung von Verschiebe- und Klemmmittel in der Aufnahme eine platzsparende Bauweise realisiert werden, die mechanisch günstig die beiden Mittel stützt.

Des Weiteren ist es bevorzugt, dass die Aufnahme der Positioniervorrichtung an dem ersten Element befestigbar ist. Eine derartige Befestigung kann form- und/oder stoffschlüssig realisiert werden. Dementsprechend ist es möglich, beispielsweise die Aufnahme mit dem ersten Element zu verschweißen, zu verlöten oder zu verkleben. Auch ist es denkbar, die Aufnahme mittels einer Schraube, einer Schwalbenschwanzverbindung oder dergleichen sowie einem Bajonettverschluss an dem ersten Element zu befestigen.

Ferner ist es möglich, eine lösbare sowie eine unlösbare Verbindung zwischen der Aufnahme und dem Element zu realisieren. Eine lösbare Verbindung hat den Vorteil, dass die teleskopierbare Vorrichtung, insbesondere die Positioniervorrichtung einfach repariert und installiert werden kann, ohne dass ein kompletter Ersatz der gesamten telekopierbaren Vorrichtung erfolgen muss.

Wie bereits erwähnt, ist bevorzugterweise in der Aufnahme das Verschiebemittel und das Klemmmittel angeordnet. Somit kann eine einfache und platzsparende Konstruktion realisiert werden, die dabei mechanisch stabil ausgeführt ist. Auch kann somit die Positioniervorrichtung als einzelne Einheit mit der Aufnahme, dem Klemm- und dem Verschiebemittel produziert und erst in einem weiteren Schritt mit dem ersten Element verbunden werden. Das spart Kosten und vereinfacht sowohl die Herstellung als auch eine mögliche Reparatur.

Ferner ist es günstig, wenn das Verschiebemittel und das Klemmmittel hintereinander in Längsrichtung der Elemente angeordnet sind. Mit Hilfe dieser Anordnung ist es möglich, durch einen Bewegungsvorgang des Verschiebemittels das Klemmmittel vorzugsweise vorher zu lösen und nachzuziehen, wobei das Klemmmittel anschließend wieder klemmt bzw. einrastet, wodurch das Verschiebemittel erneut freigegeben ist, um einen weiteren Bewegungsvorgang zu vollführen, der wiederum das Klemmmittel löst, nachzieht und klemmt. Bei einer derartigen Anordnung ist auf engem Bauraum eine einfache Konstruktion realisierbar, die durch die Bewegung bzw. den Bewegungsvorgang des Verschiebemittels ebenfalls das Klemmmittel bewegt.

Bevorzugterweise weist das Eingriffsmittel Vorsprünge, insbesondere eine Zahnstange auf. Somit ist es der Positioniervorrichtung möglich, in das Eingriffsmittel beziehungsweise in dessen Vorsprünge einzugreifen und einen einfachen gesicherten Kraftübergang zwischen beiden zu gewährleisten. Idealerweise weisen die Zahnflanken der Zähne der Zahnstange einen Winkel kleiner als 90 Grad zur Längsrichtung der Zahnstange auf. Idealerweise ist der spitze Winkel (kleiner 90 Grad) in Ausfahrrichtung des ersten Element aus dem zweiten Element orientiert, sodass der spitze Winkel eine einfache und sichere Art des Eingriffs ermöglicht, mit einem maximalen Maß an Reibung. Folglich können mithilfe des spitzen Winkels verbesserte Reibungseigenschaften erzielt werden, die einen optimalen Kraftverlauf beziehungsweise Übergang von der Zahnstange beziehungsweise von dem Eingriffsmittel auf das Positioniermittel ermöglichen.

Idealerweise wirkt das Verschiebemittel und das Klemmmittel mit Ausnehmungen zusammen. Im Gegensatz zu den Vorsprüngen haben die Ausnehmungen den Vorteil, dass diese das Gewicht der teleskopierbaren Vorrichtung reduzieren und einfach auszubilden sind, indem diese beispielsweise ausgestanzt werden.

Idealerweise sind die Ausnehmungen in dem zweiten Element oder in einem Teilelement, welches in das zweite Element einsetzbar ist, angeordnet. Im Falle der Verwendung eines Teilelements kann dieses auf einfache Weise unabhängig von einem Element beziehungsweise dem zweiten Element hergestellt und auf einfache Weise in dieses eingesetzt werden. Um ein zusätzliches Bauteil bzw. Element einzusparen ist es bevorzugt, Ausnehmungen in dem zweiten Element anzubringen. Diese können, wie bereits angedeutet, durch Stanzen in das zweite Element eingefügt werden.

Des Weiteren ist es bevorzugt, dass das zweite Element eine Führung für das Verschiebemittel aufweist, sodass dieses von außerhalb des zweiten Elements betätigbar ist. Mit anderen Worten ausgedrückt, bedarf es eines Zugangs am zweiten Element, in dem das erste Element geführt wird, sodass die Positioniervorrichtung beziehungsweise deren Verschiebemittel von außen, d.h. von außerhalb der telekopierbaren Vorrichtung, zugänglich ist. Insbesondere ist es bevorzugt, dass die Führung in Form eines Langlochs in dem zweiten Element realisiert ist. Dieses kann auf einfache Weise durch Fräsen, Stanzen, Schneiden oder dergleichen eingebracht werden.

Des Weiteren ist es von Vorteil, wenn das Verschiebemittel einen Hebel mit zwei Enden und einem dazwischen liegenden Drehpunkt aufweist. Somit ist der Hebel des Verschiebemittels um den Drehpunkt drehbar.

Idealerweise ist auf der einen Seite des Drehpunkts das eine Ende des Hebels angeordnet und auf der anderen Seite des Drehpunkts das andere Ende. Demzufolge kann durch Krafteinleitung an einem Ende des Hebels das andere Ende über den Drehpunkt beziehungsweise über diesen Hebelpunkt ebenfalls bewegt bzw. um den Drehpunkt geschwenkt werden.

Bevorzugterweise ist auf der einen Seite des Drehpunkts das eine Ende des Hebels angeordnet, das mit dem Eingriffsmittel zusammenwirkt, und auf der anderen Seite des Drehpunkts das andere Ende angeordnet, das eine geformte Fläche zur Einleitung einer Hebelkraft aufweist. Somit ist es also möglich, eine Hebelkraft von dem einen Ende über den Drehpunkt auf das andere Ende zu übertragen. Dabei kann gemäß den Hebelgesetzen ein langer Hebel zwischen Drehpunkt und beispielsweise der geformten Fläche zur Einleitung einer Hebelkraft eine große Kraft auf einen kurzen Hebel an der zum Drehpunkt gegenüberliegende Seite beziehungsweise auf dem gegenüberliegenden Ende des Hebels hervorrufen. Auf diese Weise kann folglich ein Getriebe realisiert werden, an dessen Eingang eine kleine Kraft mit großem Hebel ein großes Moment beziehungsweise eine große Kraft mit kleinem Hebel erzeugt.

Bevorzugterweise weist das Klemmmittel einen Hebel mit zwei Enden und einem dazwischen liegenden Drehpunkt auf. Dadurch ist der Hebel des Klemmmittels um den Drehpunkt drehbar.

Günstigerweise ist auf der einen Seite des Drehpunkts das erste Ende des Hebels angeordnet und auf der anderen Seite des Hebels bzw. des Drehpunkts das zweite Ende. Somit kann eine Kraft an dem ersten Ende des Hebels über den Drehpunkt auf das zweite Ende und umgekehrt übertragen werden.

Bevorzugterweise wirkt das erste Ende des Hebels mit dem Eingriffsmittel zusammen, sodass über dieses ein Kraftfluss zum zweiten Ende des Hebels hergestellt werden kann.

Idealerweise ist auf der anderen Seite des Drehpunkts das zweite Ende des Hebels angeordnet, das durch Krafteinleitung vom Verschiebemittel aus dem Eingriff mit dem Eingriffsmittel lösbar betätigbar ist. Somit ist es möglich, durch Betätigen des zweiten Endes des Hebels das erste Ende aus dem Eingriff zu lösen. Für den Fall, dass beispielsweise das Klemmmittel eine Bewegung des ersten und des zweiten Elements relativ zueinander entgegen der Verschieberichtung bzw. der Ausfahrrichtung des ersten Elements aus dem zweiten ermöglichen soll, kann durch Betätigung beziehungsweise durch Lösen des Eingriffs des Klemmmittels mit dem Eingriffsmittel ein Einfahren des einen Elements in das andere realisiert werden.

Idealerweise weist die Positioniervorrichtung ein Stellmittel auf, dass in Wirkverbindung mit dem Klemmmittel und dem Verschiebemittel steht, sodass Klemmmittel und Verschiebemittel automatisch in vorgegebene Positionen positionierbar sind. Somit ist es möglich, mittels des Stellmittels, das vorzugsweise als Feder, insbesondere als Drehfeder, ausgebildet ist, eine vordefinierte Position für das Klemmmittel und das Verschiebemittel zu definieren.

Günstigerweise ist diese vordefinierte Position so gewählt, dass das Klemmmittel mit dem Eingriffsmittel zusammenwirken kann und das Verschiebemittel nicht in Kontakt bzw. in Eingriff zu dem Eingriffsmittel gelangt. Demzufolge und unter Berücksichtigung, dass bevorzugterweise das Verschiebemittel aber auch das Klemmmittel jeweils einen Drehpunkt aufweisen, werden beide Mittel so in eine vordefinierte Position gebracht bzw. gedreht, dass stets ein Eingriff des Klemmmittels im Eingriffsmittel möglich wird, wobei gleichzeitig das Verschiebemittel so positioniert wird, dass dieses nicht in das Eingriffsmittel eingreift.

Günstigerweise ist das Stellmittel um ein Führungsmittel angeordnet. Das Führungsmittel dient dazu, dass Stellmittel an seiner Position zu halten und in vordefinierte Richtungen zu führen, sodass entsprechend der vorgegebenen Richtung eine Kraft des Stellmittels übertragen werden kann.

Idealerweise ist das Führungsmittel innerhalb der Aufnahme der Positioniervorrichtung angeordnet. Somit kann dieses auf einfache Weise mit dem Klemmund Verschiebemittel interagieren, um z.B. auf diese Kräfte zu übertragen und das Klemmund Verschiebemittel in vorgegebene Ausgangspositionen zu positionieren.

Bevorzugterweise ist das Verschiebe- und/ oder das Klemmmittel drehbar um das Führungsmittel. Somit kann günstigerweise der Drehpunkt des Verschiebe- und des Klemmmittels an dem Führungsmittel angeordnet werden, sodass sich die beiden Mittel um das Führungsmittel bzw. um je ein Führungsmittel drehen. Auf diese Weise werden also auch das Verschiebe- und das Klemmmittel von dem Führungsmittel gehalten und in Ausgestaltung der beiden Mittel als Hebel um das Führungsmittel, das als Lager des Drehpunkts eines Hebels ausgestaltbar ist, geführt.

Idealerweise ist in zumindest einem der Elemente ein Vorspannelement, insbesondere eine Feder, angeordnet, die das Teleskopieren erleichtert. Dieses Vorspannelement hat den Vorteil, dass in einem Zustand, in dem noch geringe Kräfte auf die entgegensetzten Enden der teleskopierbaren Vorrichtung wirken, deren Elemente in Position gedrückt beziehungsweise vorpositioniert werden. Somit kann eine ausreichende Kraft auf die Enden der Vorrichtung erzeugt werden, um diese auf einfache Weise durch beispielsweise die Positioniervorrichtung weiter zu erhöhen. Dadurch kann die teleskopierbare Vorrichtung in Anwendung an einer Plane bzw. einer Markise auf einfache und schnelle Weise eine hohe Druckkraft zwischen einem freien Ende und einem aufrollbaren Ende der Markise, beispielsweise befestigt an einem Campingfahrzeug, erzeugen.

Die vorher beschriebenen Merkmale, die der Ausbildung einer teleskopierbaren Vorrichtung dienen, sind frei miteinander kombinierbar.

So ist es zum Beispiel möglich, dass das Eingriffsmittel in Ausgestaltung einer Zahnstange mit den Hebeln der Positioniervorrichtung beziehungsweise des Verschiebemittels und des Klemmmittels wechselwirken beziehungsweise zusammenwirken, wobei ein Stellmittel das Verstell- und das Klemmmittel in vordefinierte Positionen führt, in denen ein Eingriff in das Eingriffsmittel für das Klemmmittel ermöglicht und/oder für das Verschiebemittel verhindert wird.

Nachstehend wird die Erfindung anhand von Ausführungsbeispielen in Verbindung mit zugehörigen Zeichnungen näher erläutert. In diesen Zeichen schematisch:
- Figur 1: einen drei-dimensionalen Längsschnitt in Längsrichtung einer teleskopierbaren Vorrichtung,
- Figur 2: eine geschnittene Seitenansicht in Längsrichtung entlang einer teleskopierbaren Vorrichtung in einem ersten Zustand,
- Figur 3: eine geschnittene Seitenansicht in Längsrichtung entlang einer teleskopierbaren Vorrichtung in einem zweiten Zustand,
- Figur 4: eine geschnittene Seitenansicht in Längsrichtung entlang einer teleskopierbaren Vorrichtung in einem dritten Zustand,
- Figur 5: eine geschnittene Seitenansicht in Längsrichtung entlang einer teleskopierbaren Vorrichtung in einem vierten Zustand,
- Figur 6: eine drei-dimensionale Ansicht einer Positioniervorrichtung,
- Figur 7: eine dreidimensionale Ansicht einer teleskopierbaren Vorrichtung in Anordnung an einem Campingfahrzeug zum Spannen einer Markise, und
- Figur 8: eine alternative Ausführung eines Elements der teleskopierbaren Vorrichtung.

In nachfolgender Beschreibung werden gleiche Bezugszeichen für gleiche Gegenstände verwendet.

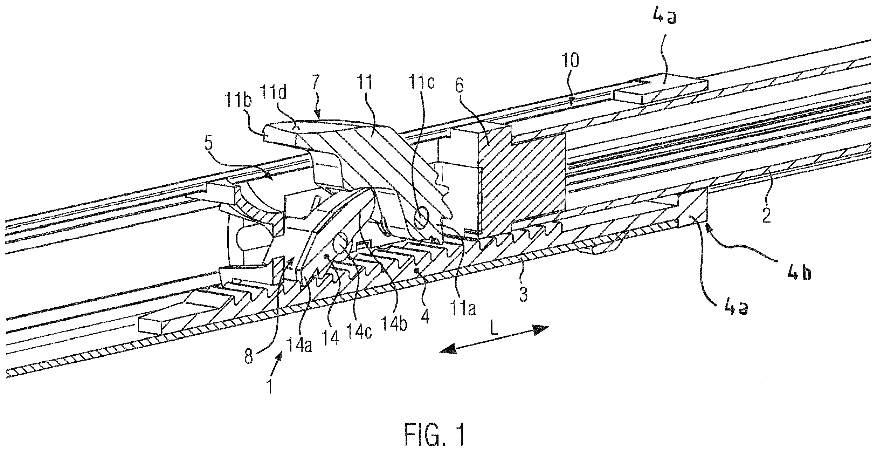

Figur 1 zeigt einen drei-dimensionalen Längsschnitt einer teleskopierbaren Vorrichtung 1. Die Vorrichtung 1 weist zwei zueinander teleskopierbare Elemente 2, 3 mit gleichem Querschnittsprofil, jedoch in unterschiedlichen Größen auf. Bei dem hier verwendeten Profil handelt es sich um ein viereckiges Hohlprofil, anstelle dessen aber auch ein rundes, quadratisches, rechteckiges oder elliptisches eingesetzt werden kann. Die beiden Elemente 2, 3 sind zueinander koaxial angeordnet, wobei das erste Element 2 zumindest teilweise innerhalb des zweiten Elements 3 positioniert ist. Anders ausgedrückt, ist das erste Element 2 nahezu vollständig aus dem zweiten Element 3 ausgefahren.

Am in Figur 1 dargestellten Ende des ersten Elements 2 ist eine Positioniervorrichtung 5 angeordnet. Diese weist eine Aufnahme 6 auf, innerhalb welcher ein Verschiebemittel 7 und eine Klemmmittel 8 angeordnet sind. Somit dient die Aufnahme zum Halten von Verschiebe- und Klemmmittel. Die Aufnahme 6 ist mit dem ersten Element 2 verbunden. Ein Teil der Aufnahme 6 ist dazu in das erste Element 2 eingeschoben und mit diesem befestigt. Diese Befestigung kann über eine Schraubverbindung, durch Löten, Schweißen oder Kleben realisiert werden. Durch die Verbindung des ersten Elements 2 mit dem Positioniermittel 5 können sich beide gleichzeitig und relativ zum zweiten Element 3 bewegen.

Das Verschiebemittel 7 der Positioniervorrichtung 5 weist einen Hebel 11 mit einem ersten und einem zweiten Ende 11 a, b und einem zwischen beiden Enden liegenden Drehpunkt 11c auf. Des Weiteren befindet sich am zweiten Ende 11b des Hebels 11 ein Griffbereich 11 d zur manuellen Einleitung einer Hebelkraft.

Am gegenüberliegenden ersten Ende 11a des Hebels 11 der Verschiebevorrichtung 7 sind Zähne angeordnet, die in eine Zahnstange 4 eingreifen können. Die Hebellänge vom zweiten Ende 11b zum Drehpunkt 11c des Hebels 11 der Positioniervorrichtung 5 ist länger als die Hebellänge vom ersten Ende 11a zum Drehpunkt 11c. Auf diese Weise kann eine Kraft, die an dem Griffbereich 11d eingebracht wird, in eine große Kraft am ersten Ende 11a übersetzt bzw. an die Zähne des ersten Endes 11a übertragen werden.

Aufgrund der Beweglichkeit der Positioniervorrichtung 5 relativ zu dem zweiten Element 3 wird eine im Uhrzeigersinn um den Drehpunkt 11c auf den Griffbereich 11d wirkende Kraft durch den Kontakt zwischen dem ersten Hebelende 11a und der Zahnstange 4 in eine Bewegung der Positioniervorrichtung 5 umgewandelt. Denn aufgrund der relativen Beweglichkeit der beiden Elemente 2, 3 zueinander, wirken zwei Kräfte, nämlich die auf den Griffbereich einwirkende Kraft und die Reaktionskraft an der Zahnstange 4, in Richtung des dargestellten Endes des ersten Elements 2. Dadurch bewegt sich also das erste Element 2 mit der Positioniervorrichtung 5 in eine ausfahrende Richtung, d.h. Element 2 bewegt sich in Figur 1 relativ zu Element 3 nach rechts. Anders ausgedrückt wird durch eine am Griffbereich 11d einwirkende Kraft eine Hebelbewegung um den Drehpunkt 11c realisiert, die das erste Element 2 aus dem zweiten Element 3 ausschiebt.

In Längsrichtung gesehen ist neben dem Verschiebemittel 7 das Klemmmittel 8 angeordnet, sodass - anders ausgedrückt - die beiden hintereinander positioniert sind. Das Klemmmittel 8 weist ebenfalls einen Hebel 14 mit einem ersten und einem zweiten Ende 14a, b und einen zwischen den beiden Enden liegenden Drehpunkt 14c auf.

Das erste Ende 14a des Hebels 14 weist Zähne auf, die in die Zahnstange 4 eingreifen. Der Abstand bzw. die Hebellänge zwischen dem ersten Ende 14a und dem Drehpunkt 14c sowie zwischen dem zweiten Ende 14b und dem Drehpunkt 14c ist ungefähr gleichlang. Somit wird eine Kraft von einem Ende des Klemmmittels 8 bzw. des Hebels 14 an das andere Ende ohne Über- oder Untersetzung übertragen. Aufgrund des Eingriffs des ersten Endes 14a des Hebels 14 bzw. des Klemmmittels 8 können Kräfte von der Zahnstange 4 auf den Hebel 14 und umgekehrt übertragen werden. Aufgrund der Tatsache, dass der Drehpunkt 14c des Hebels 14 an der Positioniervorrichtung 5 bzw. an deren Aufnahme 6 angeordnet ist, wird die zwischen Klemmmittel 8 und Zahnstange 4 wirkende Kraft auf die Aufnahme 6 übertragen, die die dort empfangenen Kräfte an das erste Element 2 weiterleitet.

Auf diese Weise kann eine einfahrende Bewegung des ersten Elements 2 in das zweite Element 3, d.h. Element 2 bewegt sich in Figur 1 relativ zu Element 3 nach links, verhindert werden, wodurch diese Bewegungsrichtung mithilfe des Klemmmittels 8 gesperrt ist.

Das zweite Ende 14b des Klemmmittels 8 befindet sich unterhalb des Verschiebemittels 7, wobei das zweite Ende 14b zwischen dem Drehpunkt 11c und dem zweiten Ende 11b der Schiebevorrichtung 7 angeordnet ist. D.h., dass durch eine Kraft am Griffbereich 11d der Positioniervorrichtung 5 im entgegengesetzten Uhrzeigersinn um den Drehpunkt 11c der Hebel 11 auf den Hebel 14 einwirkt, bzw. dass der Hebel 11 auf das zweite Ende 14b des Klemmmittels 8 einwirkt. Dies führt dazu, dass der Hebel 14 im Uhrzeigersinn dreht, wodurch der Eingriff des ersten Endes 14a mit der Zahnstange 4 gelöst wird. Auf diese Weise wird eine einfahrende Bewegung des ersten Elements 2 in das zweite Element 3 ermöglicht.

Wie Figur 1 weiter zeigt, ist innerhalb des zweiten Elements 3 die bereits mehrmals erwähnte Zahnstange 4 als Eingriffsmittel angeordnet. Die Zahnstange ist gegenüberliegend zu einem als Führung ausgebildeten Langloch 10 im zweiten Element 3 positioniert. Das Langloch dient zum einen dazu, die Positioniervorrichtung 5 zu führen, und zum anderen, den Hebel 11 des Verschiebemittels 7 von außen, d.h. von außerhalb des zweiten Elements 3, zugänglich zu gestalten.

Die Zahnstange 4 liegt nicht nur an der Innenseite des zweiten Elements 3 an, sondern bildet auch noch einen Abschluss 4a für ein Ende des zweiten Elements 3. Der Abschluss 4a begrenzt den maximalen Bereich, in dem die Positioniervorrichtung 5 innerhalb des zweiten Elements 3 verfahren werden kann.

Ferner weist die Zahnstange 4 einen Absatz 4b auf, der die Außenseite des ersten Elements 2 so im zweiten Element 3 führt, dass die Außenseite des ersten Elements 2 nicht in Kontakt mit den Zähnen der Zahnstange 4 gelangt. Ferner bildet der Absatz 4b mit der Außenseite des zweiten Elements 3 eine einheitliche Fläche, wodurch die Zahnstange 4 an ihrer Position gehalten wird. Anders ausgedrückt stützt sich der Absatz 4b so am Ende des zweiten Elements 3 ab, dass die Zahnstange 4 sicher an der dargestellten Position bzw. am Ende des zweiten Elements 3 gehalten wird.

Ferner weist die Zahnstange 4 Zähne auf, deren Zahnflanken einen Winkel kleiner als 90 Grad in Orientierung zur Längsrichtung L aufweisen. Dabei zeigt der spitze Winkel von unter 90 Grad zur Öffnung des zweiten Elements 3, in der das erste Element 2 eingeführt ist.

Die Zahnstange 4 ist mit dem zweiten Element 3 beispielsweise über einen Klebstoff verbunden. Auch ist es möglich, die Zahnstange mit dem Element 3 zu verschrauben.

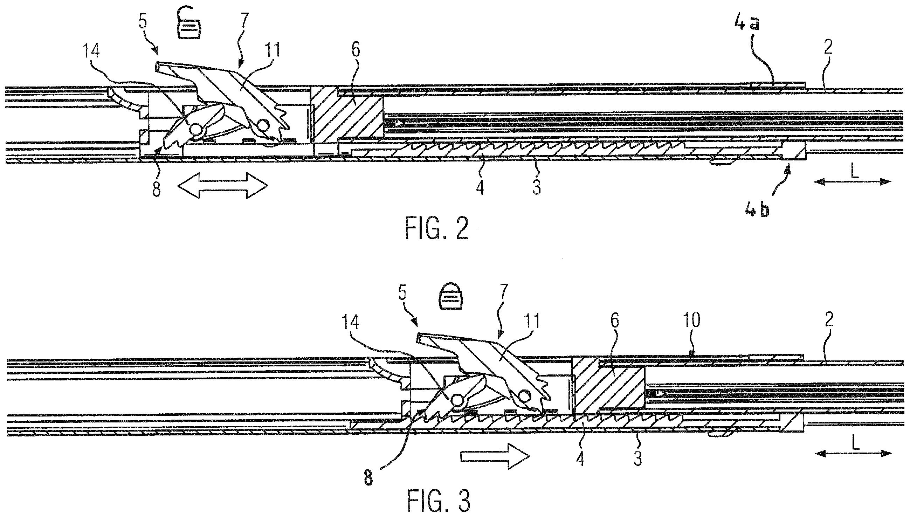

Figuren 2 bis 5 zeigen eine geschnittene Seitenansicht in Längsrichtung L entlang der teleskopierbaren Vorrichtung 1 aus Figur 1 in vier unterschiedlichen Zuständen bzw. vier unterschiedlichen Positionen des ersten und zweiten Elements 2, 3 zueinander. Dabei wird für jede Figur mit einem symbolisierten offenen oder geschlossenen Schloss angezeigt, ob das erste Element 2 in das zweite Element 3 einfahrbar ist, oder ob das Einfahren gesperrt ist.

In Figur 2 ist die Positioniervorrichtung 5 bzw. sind die Hebel 11, 14 neben der Zahnstange 4 angeordnet, wodurch die Hebel nicht mit der Zahnstange 4 zusammenwirken können. Folglich ist es bei dieser Teleskopstellung bzw. in diesem ersten Zustand der telekopierbaren Vorrichtung 1 möglich, entsprechend dem dargestellten Doppelpfeil, beide Elemente 2, 3 beliebig zueinander zu verschieben, d.h. dass das erste Element 2 in Figur 2 nach links und rechts im Element 3 verfahrbar ist. Anders ausgedrückt, beide Elemente 2, 3 sind in ihrer Bewegung frei, sodass ein Ein- und Ausfahren des Elements 2 in/aus dem Element 3 beliebig möglich ist.

Im zweiten Zustand, dargestellt in Figur 3, ist das zweite Element 2 so weit aus dem ersten Element 3 ausgefahren, dass die Zähne des Hebels 14 der Klemmvorrichtung 8 in die Zähne der Zahnstange 4 eingreifen. Hingegen befindet sich der Hebel 11 der Positioniervorrichtung nicht im Eingriff mit der Zahnstange 4.

Die Orientierung der Zahnflanken der Zähne der Zahnstange 4 im Zusammenspiel mit den Zähnen des Hebels 14 der Klemmvorrichtung 8 ist darauf ausgelegt, Kräfte, die von dem ersten Element entlang der Längsrichtung L auf die Zahnstange 4 wirken, effektiv auf die Zahnstange 4 zu übertragen. So stemmt sich der Hebel 14 gegen die Zähne mit in Richtung des ersten Elements 2 geneigten Zahnflanken der Zahnstange 4. Dadurch werden Kräfte, die auf das erste Element 2 einwirken und dieser in das zweite Element 3 versuchen einzufahren, auf die Zahnstange 4 weitergeleitet.

Mithilfe des Absatzes 4b der Zahnstange 4, der die Zahnstange auf das zweite Element 3 abstützt und eine Bewegung der Zahnstange in Richtung der vom ersten Element einwirkenden Kraft verhindert, können Kräfte von der Zahnstange 4 auf das zweite Element 3 übertragen werden. Folglich kann mittels der dargestellten telekopierbaren Vorrichtung 1 eine Kraft bzw. Kräfte, die auf das erste Element 2 in Längsrichtung L so einwirken, dass sich das erste Element 2 in Richtung des zweiten Elements 3 bewegt, auf das zweite Element 3 übertragen werden.

Da die Zahnstange 4 mit dem zweiten Element 3 und die Positioniervorrichtung 5 mit dem ersten Element 2 verbunden ist, kann das erste Element 2 nun nicht mehr in das zweite Element 3 einfahren. Denn diese Bewegung wird durch den Eingriff von Zahnstange 4 und Hebel 14 verhindert. Dementsprechend wird eine Kraft, die in Figur 2 von rechts auf das erste Element 2 einwirkt, auf das zweite Element 3 weitergegeben.

Die oben dargestellte Sperrung der Bewegung des ersten Elements 2 in das zweite Element 3 ist äquivalent zu einer auf das zweite Element 3 einwirkenden Kraft, durch die das zweite Element 3 über das erste Element 2 geschoben würde. Ferner ist die obige Darstellung der Bewegungssperrung auch zutreffend, wenn jeweils eine Kraft auf die Elemente 2 und 3 einwirkt, die zum Einfahren des ersten Elements 2 in das zweite 3 führen würden.

Figur 3 zeigt einen dritten Zustand der teleskopierbaren Vorrichtung 1 aus Figur 1. In diesem dritten Zustand drückt die Positioniervorrichtung 5 aktiv das erste Element 2 aus dem zweiten Element 3, um das erste Element 2 weiter aus dem zweiten auszufahren.

Durch Aufbringen einer Kraft auf den Griffbereich 11d der Positioniervorrichtung 5 schwenkt der Hebel 11 um den Drehpunkt 11c im Uhrzeigersinn. Durch diese Schwenken gelangt das Ende 11a des Verschiebemittels 7 mit seinen Zähnen in Eingriff mit der Zahnstange 4.

Aufgrund des Schwenkens bzw. aufgrund der hervorgerufenen Drehbewegung des Hebels 11 im Uhrzeigersinn um den Drehpunkt 11c bewegen sich die Zähne am Ende 11a des Hebels 11 ebenfalls im Uhrzeigersinn und greifen in die Zahnstange 4 ein. Durch das Eingreifen wechselwirkt die am Griffbereich 11d eingebrachte Kraft mit der Zahnstange 4.

Das bedeutet, dass die eingebrachte Kraft am langen Hebel zwischen dem zweiten Ende 11b und dem Drehpunkt 11c in eine größere Kraft am ersten Ende 11a übersetzt wird. Diese größere Kraft ist wegen des Drehpunkts 11c in entgegengesetzte Richtung an der Zahnstange 4 orientiert und verschiebt aufgrund der Beweglichkeit zwischen erstem und zweiten Element 2, 3 die Positioniervorrichtung 5 bzw. das erste Element 2 so, dass das erste Element 2 aus dem zweiten Element 3 ausgefahren wird.

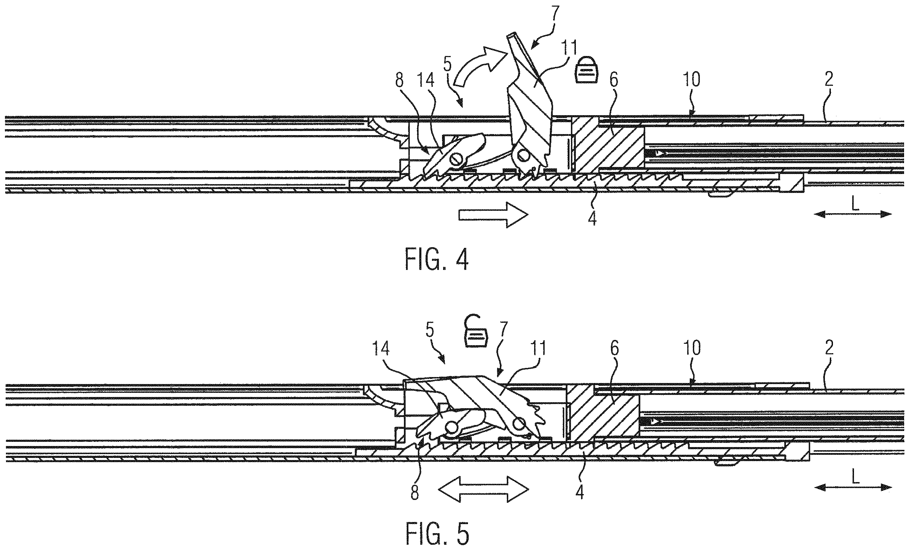

Mit anderen Worten und vereinfacht ausgedrückt, fließt die Kraft, die in Figur 4 auf den Hebel 11 nach rechts wirkt, durch Bewegung des Hebels 11 im Uhrzeigersinn zum ersten Element 2. Dadurch, dass die beiden Elemente 2 und 3 relativ zueinander beweglich ausgebildet sind, wirkt die am Griffbereich 11d des Hebels 11 eingebrachte Kraft durch Zusammenwirken mit der Zahnstange 4 im Endeffekt auf den Drehpunkt 11c und somit auf die Aufnahme 6 der Positioniervorrichtung 5. Dies resultiert in eine Bewegung der Positioniervorrichtung 5 bzw. in eine Bewegung des ersten Elements 2 nach rechts bzw. in ein Ausfahren des ersten Elements 2 aus dem zweiten 3.

Somit wird also das erste Element 2 relativ zum zweiten Element 3 nach rechts ausgefahren. Durch die Bewegung der Aufnahme 6 nach rechts bewegt sich auch das Klemmmittel 14 nach rechts, da dieses über den Drehpunkt 14c mit der Aufnahme 6 der Positioniervorrichtung 5 verbunden ist.

Aufgrund der Orientierung der Zähne der Zahnstange 4 wird durch eine ausfahrende Bewegung des ersten Elements 2 nach rechts, das erste Ende 14a des Hebels 14 des Klemmmittels 8 aus dem Krafteingriff mit der Zahnstange 4 gelöst und nachgezogen. Für den Fall, dass der Hebel 11 im Uhrzeigersinn nicht weiterbewegt oder sogar entgegen des Uhrzeigersinns bewegt wird, um eine weitere Pumpbewegung des Hebels 11 nach rechts beziehungsweise um den Drehpunkt 11c im Uhrzeigersinn zu vollführen, greift das erste Ende 14a des Hebels 14 erneut in die Zahnstange 4 ein, sodass eine Bewegung des ersten Elements 2 nach links beziehungsweise eine einfahrende Bewegung des ersten Elements 2 in das zweite Element 3 unterbunden wird.

In Figur 5 ist ein weiterer Zustand der teleskopierbaren Vorrichtung 1 dargestellt. In diesem befinden sich weder der Hebel 14 des Klemmmittels 8 noch der Hebel 11 des Verschiebemittels 7 bzw. deren erste Ende 11a, 14a im Eingriff mit der Zahnstange 4.

Das Klemmmittel 8 bzw. dessen zweites Ende 14b ist, wie oben zu Figur 1 bereits beschrieben, unterhalb des Verschiebemittels 7 bzw. unterhalb des Hebelstück zwischen zweitem Ende 11b und Drehpunkt 11c des Verschiebemittels 7 angeordnet.

Aufgrund dieser Ausbildung ist es möglich, dass durch eine Bewegung des Griffbereichs 11d um den Drehpunkt 11c entgegen dem Uhrzeigersinn das zweite Ende 11b nach unten schwenkt und somit ebenfalls das zweite Ende 14b des Hebels 14 nach unten bewegt, wodurch das erste Ende 14a des Klemmmittels 8 im Uhrzeigersinn bzw. nach oben angehoben wird. Auf diese Weise wird der Eingriff zwischen Klemmmittel 8 und Zahnstange 4 gelöst, wodurch die komplette Positioniervorrichtung 5 aus dem Eingriff mit der Zahnstange 4 gelöst ist. Folglich kann das erste Element 2 entlang der Längsrichtung L nach links und rechts bzw. beliebig verschoben werden.

Wie Figuren 2 bis 5 ferner zeigen, ist an der Oberseite des zweiten Elements 3 entlang der Längsrichtung L das Langloch 10 angeordnet, das der Führung der Positioniervorrichtung 5 sowie der Erreichbarkeit des Hebels 11 der Positioniervorrichtung 5 bzw. des Verschiebemittels 7 dient. Gegenüber dem Langloch 10 ist das als Zahnstange ausgebildete Eingriffsmittel 4 innerhalb des zweiten Elements 3 angeordnet, mit welchem die Positioniervorrichtung 5 zusammenwirkt.

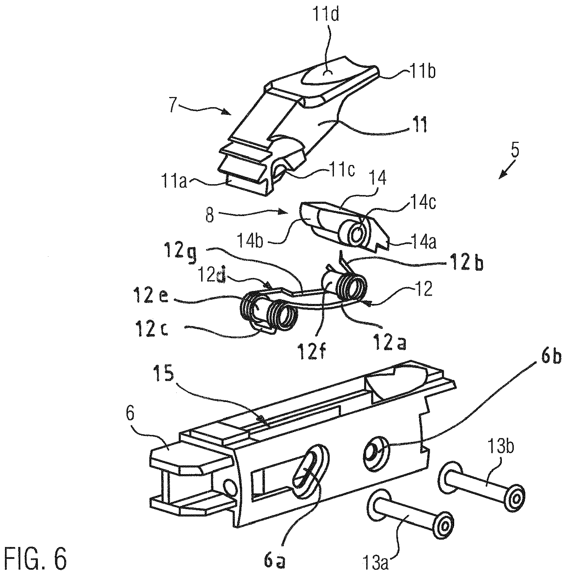

Figur 6 zeigt eine drei-dimensionale Ansicht der Positioniervorrichtung 5 aus den Figuren 1 bis 5. Wie bereits zu Figur 1 ausgeführt, weist die Positioniervorrichtung 5 ein Verschiebemittel 7 und ein Klemmmittel 8 auf. Beide Mittel verfügen über jeweils einen Hebel 11, 14 mit einem Drehpunkt 11c, 14c sowie einem ersten 11a, 14a und einem zweiten Ende 11b, 14b. Die ersten Enden 11a, 14a der Hebel weisen Zähne auf, die in die Zahnstange 4 eingreifen können.

Die Aufnahme 6, mit der die Positioniervorrichtung 5 an dem ersten Element 2 befestigt ist, verfügt in ihrem Inneren über einen Hohlraum 15, in welchem das Klemm- 8 und Verschiebemittel 7 eingesetzt werden.

Des Weiteren zeigt Figur 6ein Stellmittel 12 mit einer Drehfeder 12a und einem Haltemittel 12d.

Die Drehfeder 12a hat zwei Enden 12b, c an entgegengesetzten Seiten. Mithilfe dieser Enden können Federkräfte übertragen werden. Die Enden 12b, c sind um Hülsen 12e, f des Haltemittels 12d gewickelt bzw. angeordnet, wobei die Hülsen 12e,f über ein Verbindungsteil 12g miteinander verbunden sind. Das Haltemittel 12d hat die Aufgabe, eine Verdrehung der beiden Federenden 12b, c dergestalt zu vermeiden, dass die Mittelpunkte der beiden gedrehten Enden 12b, c der Drehfeder 12a parallel ausgerichtet bleiben. Dies erleichtert die Montage der Positioniervorrichtung 5 bzw. des Stellmittels 12 im Hohlraum 15 der Aufnahme 6.

Zum Halten der Hülsen 12e, f in der Aufnahme 6 sind zwei Stifte 13a, b als Führungsmittel 13 vorgesehen. Hierbei hält der Stift 13a die Hülse 12e und der Stift 13b die Hülse 12f an einer vordefinierten Position an der Aufnahme 6. Die Positionen werden durch Löcher 6a, b in der Aufnahme 6 bestimmt, wobei das Loch 6a als geneigtes Langloch ausgebildet ist.

Im zusammengebauten Zustand sind an den Hülsen 12e, f die Drehpunkte 11c und 14c der Hebel 11 bzw. 14 des Verschiebe- 7 bzw. Klemmmittels 8 angeordnet. Demzufolge drehen die Hebel 11 und 14 um die Stifte 13a, b. Ferner wirken die an den Enden 12b, c der Drehfeder 12a hervorgerufenen Kräfte gegen die Hebel 11, 14. So wird der Hebel 14 aufgrund des Drehfederendes 12b im Uhrzeigersinn vorgespannt, sodass das erste Ende 14a mit seinen Zähnen in einer Ausgangsposition möglichst weit in Richtung der Zahnstange 4 bzw. möglichst weit in Richtung des Uhrzeigersinns gedreht wird. Dadurch kann stets ein sicherer Eingriff des Hebels 14 bzw. dessen Endes 14a in der Zahnstange 4 gewährleistet werden.

Des Weiteren wird der Hebel 11 bzw. das Verschiebemittel 7 mittels des Drehfederendes 12c ebenfalls im Uhrzeigersinn vorgespannt, wodurch das erste Ende 11 a mit seinen Zähnen in einer Ausgangsposition geführt wird, in der die Zähne des Hebels möglichst weit von der Zahnstange 4 positioniert sind.

Um das Eingreifen und Lösen der Zähne des Hebels 11 des Verschiebemittels 7 in die Zahnstange 4 zu vereinfachen, weist die Aufnahme 6 das geneigte Langloch 6a auf. So befindet sich der Stift 13a, um den sich der Drehpunkt 11c des Hebels 11 dreht, beispielsweise beim Eingriff in die Zahnstange 4 (vgl. Figur 4) in der unteren Position. Demgegenüber befindet ich der Stift 13a in der oberen Position des geneigten Langlochs, wenn der Hebel 11 des Verschiebemittels 7 eine Position einnimmt, wie in Figuren 2, 3 und 5 dargestellt, in denen der Hebel 11 nicht mit der Zahnstange 4 zusammenwirkt.

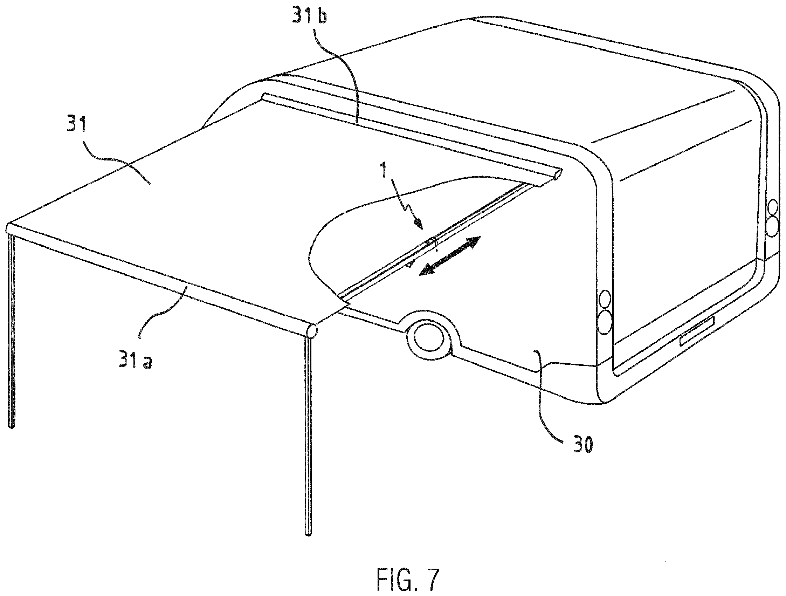

Figur 7 zeigt eine dreidimensionale Ansicht der teleskopierbaren Vorrichtung 1 in Anordnung an einem Wohnwagen bzw. Campingfahrzeug 30 zum Spannen einer Markise 31.

Wie in Figur 7 dargestellt, ist die telekopierbare Vorrichtung 1 zwischen einem freien Ende 31a und einem aufrollbaren Ende 31b der Markise 31 bzw. der Plane gespannt, wobei das freie Ende von zwei Pfosten gestützt wird und das aufrollbare Ende 31b an einem Campingfahrzeug 30 angeordnet ist. Auf diese Weise kann ein Abfließen von Regenwasser entlang der gespannten und geneigten Plane gewährleistet werden, ohne dass in Senken innerhalb der Fläche der Plane 31 Wasser gestaut wird. Selbstverständlich kann eine weitere teleskopierbare Vorrichtung 1 auf der gegenüberliegenden Seite der Markise 31, in der Nähe des hinteren Stützpfostens angeordnet sein.

Demzufolge werden mithilfe der Positioniervorrichtung 5 der teleskopierbaren Vorrichtung 1 die Enden der Vorrichtung 1 in entgegengesetzte Richtungen gespannt, sodass das freie Ende 31a und das aufrollbare Ende 31b der Markise gegeneinander verspannt werden. Dies führt, wie angedeutet, dazu, dass beiden Enden der Markise derart gegeneinander verspannt werden, dass Regenwasser entlang der gespannten und idealerweise auch geneigten Plane bzw. Markise 31 abfließt.

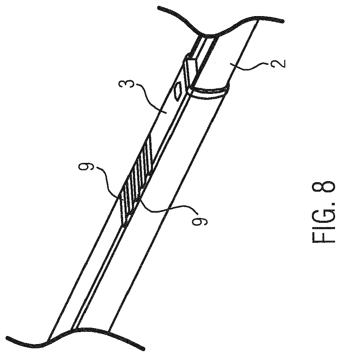

Figur 8 zeigt eine alternative Ausführung der teleskopierbaren Vorrichtung 1. Die hier dargestellte Alternative ist im Wesentlichen identisch zu der vorher vorgestellten, jedoch mit dem Unterschied, dass anstelle der Zahnstange 4 das Verschiebemittel 7 und das Klemmmittel 8 mit Ausnehmungen 9 zusammenwirken, die in dem zweiten Element 3 angeordnet sind. Auf diese Weise kann ein Bauteil und somit Produktionskosten eingespart werden. Selbstverständlich ist es auch möglich, dass die Ausnehmungen 9 in einem weiteren Teil ähnlich der Zahnstange ausgebildet sind, das beispielsweise anstelle der Zahnstange in das zweite Element 3 eingesetzt wird. Die oben vorgestellte Funktionsweise trifft auch auf die Variante mit den Ausnehmungen zu, gleich ob sie in dem zweiten Element 3 oder einem weiteren Teilelement, z.B. ähnlich der Zahnstange, angeordnet sind.

In einer nicht dargestellten Ausführung kann an dem ersten und/oder zweiten Element eine Feder angeordnet sein, die das erste Element 2 so weit aus dem zweiten Element 3 ausfährt, dass das Klemmmittel 8 bzw. das Hebelende 14a mit dem ersten, weitest im zweiten Element innen liegenden Zahn der Zahnstange 4 wechselwirkt. Somit kann die Feder das Telekopieren erleichtern und erleichtert folglich den Aufbau einer Markise.

### BEZUGSZEICHENLISTE

- 1: telekopierbare Vorrichtung
- 2: erstes Element
- 3: zweites Element
- 4: Zahnstange
- 4a: Abschluss
- 4b: Absatz
- 5: Positioniervorrichtung
- 6: Aufnahme
- 6a: Loch/Langloch
- 6b: Loch
- 7: Verschiebemittel
- 8: Klemmmittel
- 9: Ausnehmung
- 10: Langloch
- 11: Hebel des Verschiebemittel
- 11a: erste Hebelende
- 11b: zweites Hebelende
- 11c: Drehpunkt
- 11d: Griffbereich
- 12: Stellmittel
- 12a: Drehfeder
- 12b: Federende
- 12c: Federende
- 12d: Haltemittel
- 12e: Hülse
- 12f: Hülse
- 12g: Verbindungsteil
- 13: Führungsmittel
- 13a: Stift
- 13b: Stift
- 14: Hebel des Klemmmittels
- 14a: erste Hebelende
- 14b: zweites Hebelende
- 14c: Drehpunkt
- 15: Hohlraum
- 30: Campingfahrzeug
- 31: Markise
- 31a: freies Ende
- 31b: aufrollbares Ende

## Patentansprüche

1. Anordnung, insbesondere für ein Campingfahrzeug, mit:
einer Markise, wobei die Markise ein freies Ende (31a) und ein aufrollbares Ende (31b) aufweist, und
einer teleskopierbaren Vorrichtung (1), beispielsweise ein Spannsparren, zum Verspannen des freien Endes (31a) und des aufrollbaren Endes (31b) der Markise gegeneinander mit
- einem ersten Element (2) und einem zweiten Element (3), die relativ zueinander teleskopierbar sind,
- einem Eingriffsmittel (4), das an dem zweiten Element (3) angeordnet ist,
- und einer Positioniervorrichtung (5), die an dem ersten Element (2) angeordnet ist,
**dadurch gekennzeichnet, dass**
- die Positioniervorrichtung (5) ein Verschiebemittel (7) und Klemmmittel (8) aufweist,
- wobei die Positioniervorrichtung (5) so in Wirkeingriff mit dem Eingriffsmittel (4) gebracht werden kann, dass
▪ durch Betätigung des Verschiebemittels (7) der Positioniervorrichtung (5) eine Druckkraft erzeugt wird, mithilfe der das erste Element (2) relativ zu dem zweiten Element (3) ausfahrbar ist, wobei bei Betätigung des Verschiebemittels (7) dieses mit dem Eingriffsmittel (4) in Eingriff gelangt, und dass
▪ durch das Klemmmittel (8) das Einfahren des ersten Elements (2) relativ zu dem zweiten Element (3) verhinderbar ist, wobei das Klemmmittel (8) zur Arretierung der Positioniervorrichtung (5) mit dem Eingriffsmittel (4) zusammenwirkt.

2. Anordnung nach Anspruch 1, **dadurch gekennzeichnet, dass** bei Lösen der Positioniervorrichtung (5) das erste Element (2) entlang des zweiten Elements (3) frei bewegbar ist, während der Wirkeingriff im Eingriffsmittel (4) von Verschiebemittel (7) und Klemmmittel (8) gelöst ist, wobei die Positioniervorrichtung (5) ferner eine Aufnahme (6) zumindest zum Halten von Verschiebe- und Klemmmittel aufweist, wobei die Aufnahme (6) vorzugsweise zumindest teilweise innerhalb des ersten Elements (2) angeordnet ist, und wobei vorzugsweise in der Aufnahme das Verschiebemittel (7) und das Klemmmittel (8) angeordnet ist.

3. Anordnung nach Anspruch 1 oder 2, **dadurch gekennzeichnet, dass** die Aufnahme (6) der Positioniervorrichtung (5) an dem ersten Element (2) befestigbar ist.

4. Anordnung nach einem dem vorhergehenden Ansprüche, **dadurch gekennzeichnet, dass** das erste Element (2) und das zweite Element (3) ein rohrförmiges Profil mit vorzugsweise einem quadratischen, rechteckigen, runden oder elliptischen Querschnitt aufweisen.

5. Anordnung nach einem dem vorhergehenden Ansprüche, **dadurch gekennzeichnet, dass** das Verschiebemittel (7) und das Klemmmittel (8) in der Aufnahme (6), vorzugsweise hintereinander in Längsrichtung (L) der Elemente (2,3), angeordnet sind.

6. Anordnung nach einem dem vorhergehenden Ansprüche, **dadurch gekennzeichnet, dass** das Eingriffsmittel (4) Vorsprünge, insbesondere eine Zahnstange aufweist, wobei vorzugsweise eine Zahnflanke der Zähne der Zahnstange einen Winkel kleiner 90 Grad zur Längsrichtung (L) der Zahnstange aufweisen.

7. Anordnung nach einem dem vorhergehenden Ansprüche, **dadurch gekennzeichnet, dass** das Verschiebemittel (7) und das Klemmmittel (8) mit Ausnehmungen (9) zusammenwirken, wobei die Ausnehmungen in dem zweiten Element (3) oder in ein Teilelement, welches in das zweite Element (3) einsetzbar ist, angeordnet sind.

8. Anordnung nach einem dem vorhergehenden Ansprüche, **dadurch gekennzeichnet, dass** das zweite Element (3) eine Führung (10) für das Verschiebemittel (7) aufweist, sodass dieses von außerhalb des zweiten Elements (3) betätigbar ist.

9. Anordnung nach einem dem vorhergehenden Ansprüche, **dadurch gekennzeichnet, dass** das Verschiebemittel (7) einen Hebel (11) mit zwei Enden (11a,b) und einem dazwischen liegenden Drehpunkt (11c) aufweist, wobei auf der einen Seite des Drehpunkts (11c) das eine Ende (11a) des Hebels angeordnet ist, das mit dem Eingriffsmittel (4) zusammenwirkt, und wobei auf der anderen Seite des Drehpunkts (11c) das andere Ende (11b) des Hebels angeordnet ist, das eine geformte Fläche (11d) zur Einleitung einer Hebelkraft aufweist.

10. Anordnung nach einem dem vorhergehenden Ansprüche, **dadurch gekennzeichnet, dass** das Klemmmittel (8) einen Hebel (14) mit zwei Enden (14a,b) und einem dazwischen liegenden Drehpunkt (14c) aufweist, wobei auf der einen Seite des Drehpunkts (14c) das eine Ende (14a) des Hebels angeordnet ist, das mit dem Eingriffsmittel (6) zusammenwirkt, und wobei auf der anderen Seite des Drehpunkts (14c) das andere Ende (14b) des Hebels angeordnet ist, das durch Krafteinleitung vom Verschiebemittel (7) aus dem Eingriff mit dem Eingriffsmittel (4) lösbar betätigbar ist.

11. Anordnung nach einem dem vorhergehenden Ansprüche, **dadurch gekennzeichnet, dass** die Positioniervorrichtung (5) ein Stellmittel (12), vorzugsweise eine Feder, aufweist, das in Wirkverbindung mit dem Klemmmittel (8) und dem Verschiebemittel (7) steht, sodass Klemmmittel (8) und Verschiebemittel (7) automatisch in vorgegebene Positionen positionierbar sind.

12. Anordnung nach einem dem vorhergehenden Ansprüche, **dadurch gekennzeichnet, dass** das Stellmittel (12) um ein Führungsmittel (13) angeordnet ist, das vorzugsweise innerhalb der Aufnahme (6) der Positioniervorrichtung (5) angeordnet ist.

13. Anordnung nach einem dem vorhergehenden Ansprüche, **dadurch gekennzeichnet, dass** das Verschiebe- (7) und/oder das Klemmmittel (8) drehbar um das Führungsmittel (13) ist.

14. Anordnung nach einem dem vorhergehenden Ansprüche, **dadurch gekennzeichnet, dass** ein Vorspannelement, insbesondere eine Feder, in zumindest einem der Elemente (2,3) angeordnet ist, um das Telekopieren zu erleichtern.

15. Campingfahrzeug mit einer Anordnung nach einem der vorhergehenden Ansprüche, wobei das aufrollbare Ende (31b) der Markise (31) am Campingfahrzeug (30) angebracht ist und die teleskopierbare Vorrichtung (1) zwischen dem freien Ende (31a) und dem aufrollbaren Ende (31b) der Markise (31) spannbar ist.

## Claims

1. Arrangement, in particular for a camping vehicle, with:
An awning, wherein the awning has a free end (31a) and an end (31b) that can be rolled up, and
A telescopic device (1), for example a tensioning spar for tensioning the free end (31a) and the end (31b) that can be rolled up of the awning against one another with
- A first element (2) and a second element (3) which can be telescoped relative to one another,
- An engagement means (4) which is arranged on the second element (3),
- And a positioning device (5) which is arranged on the first element (2),
**characterized by that**
- The positioning device (5) comprises a shifting means (7) and a clamping means (8),
- Wherein the positioning device (6) can be brought into an active engagement with the engagement means (4) in such a manner that
• By activating the shifting means (7) of the positioning device (5) a pressure force is generated with the aid of which the first element (2) can be extended relative to the second element (3), wherein upon activation of the shifting means (7) the latter moves into engagement with the engagement means (4), and that
• The introduction of the first element (2) relative to the second element (3) can be prevented by the clamping means (8), wherein the clamping means (8) cooperates with the engagement means (4) for stopping the positioning device (5).

2. Arrangement according to Claim 1, **characterized by that** during the separation of the positioning device (5), the first element (2) can be freely moved along the second element (3) whereas the active engagement in the engagement means (4) is separated from the shifting means (7) and the clamping means (8), wherein the positioning device (5) furthermore comprises a receptacle (6) at least for holding the shifting and clamping means, wherein the receptacle (6) is preferably arranged at least partially inside the first element (2), and wherein the shifting means (7) and the clamping means (8) are preferably arranged in the receptacle.

3. Arrangement according to Claim 1 or 2, **characterized by that** the receptacle (6) of the positioning device (5) can be fastened on the first element (2).

4. Arrangement according to one of the previous claims, **characterized by that** the first element (2) and the second element (3) have a tubular profile, preferably with a quadratic, rectangular, round or elliptical cross section.

5. Arrangement according to one of the previous claims, **characterized by that** the shifting means (7) and the clamping means (8) are arranged in the receptacle (6), preferably in series in the longitudinal direction (L) of the elements (2, 3).

6. Arrangement according to one of the previous claims, **characterized by that** the engagement means (4) has projections, in particular a toothed rack, wherein one tooth flank of the teeth of the toothed rack preferably has an angle smaller than 90 degrees with the longitudinal direction (L) of the toothed rack.

7. Arrangement according to one of the previous claims, **characterized by that** the shifting means (7) and the clamping means (8) cooperate with recesses (9) wherein the recesses are arranged in the second element (3) or in a partial element which can be inserted into the second element (3).

8. Arrangement according to one of the previous claims, **characterized by that** the second element (3) comprises a guide (10) for the shifting means (7), so that the latter can be activated from outside of the second element (3).

9. Arrangement according to one of the previous claims, **characterized by that** the shifting means (7) comprises a lever (11) with two ends (11a, b) and a point of rotation (11c) located between them, wherein the one end (11a) of the lever is arranged on the one side of the point of rotation (11c), which end cooperates with the engagement means (4), and wherein the other end (11b) of the lever is arranged on the other side of the point of rotation (11c), which end comprises a shaped surface (11d) for the introduction of a lever force.

10. Arrangement according to one of the previous claims, **characterized by that** the clamping means (8) comprises a lever (14) with two ends (14a, b) and a point of rotation (14c) located between them, wherein the one end (14a) of the lever, which end cooperates with the engagement means (6), is arranged on the one side of the point of rotation (14c) and wherein the other end (14b) of the lever is arranged on the other side of the point of rotation (14c) which end can be separately activated out of the engagement with the engagement means (4) by the introduction of force from the shifting means (7).

11. Arrangement according to one of the previous claims, **characterized by that** the positioning device (5) comprises an adjustment means (12), preferably a spring, which has an active connection with the clamping means (8) and the shifting means (7) so that the clamping means (8) and the shifting means (7) can be automatically positioned in given positions.

12. Arrangement according to one of the previous claims, **characterized by that** the adjustment means (12) is arranged around a guide means (13) preferably arranged inside the receptacle (6) of the positioning device (5).

13. Arrangement according to one of the previous claims, **characterized by that** the shifting means (7) and/or the clamping means (8) can rotate about the guide means (13).

14. Arrangement according to one of the previous claims, **characterized by that** a pre-tensioning element, in particular a spring, is arranged in at least one of the elements (2, 3) in order to facilitate the telescoping.

15. Camping vehicle with an arrangement according to one of the previous claims, wherein the awning (31) end (31b) which can be rolled up is attached to the camping vehicle (30) and the telescopic device (1) can be tensioned between the free end (31a) and the awning (31) end (31b) which can be rolled up.

## Revendications

1. Ensemble, en particulier destiné à un véhicule de camping, comprenant :
un store, le store comportant une extrémité libre (31 a) et une extrémité enroulable (31 b), et
un dispositif télescopique (1), par exemple un chevron tendeur, destiné à bander l'extrémité libre (31 a) et l'extrémité enroulable (31 b) du store l'une par rapport à l'autre comprenant
- un premier élément (2) et un second élément (3), qui sont télescopiques l'un par rapport à l'autre,
- un moyen de prise (4), qui est disposé sur le second élément (3),
- et un dispositif de positionnement (5), qui est disposé sur le premier élément (2),
**caractérisé en ce que**
- le dispositif de positionnement (5) comporte un moyen de déplacement (7) et un moyen de serrage (8),
- le dispositif de positionnement (5) pouvant être amené en prise fonctionnelle avec le moyen de prise (4), de telle manière que
• une force de pression est générée par l'actionnement du moyen de déplacement (7) du dispositif de positionnement (5), au moyen de laquelle le premier élément (2) peut être déployé par rapport au second élément (3), le moyen de déplacement (7), lors de son actionnement, venant en prise dans le moyen de prise (4), et que
• la rentrée du premier élément (2) par rapport au second élément (3) peut être empêchée par le moyen de serrage (8), le moyen de serrage (8) coopérant avec le moyen de prise (4) pour bloquer le dispositif de positionnement (5).

2. Ensemble selon la revendication 1, **caractérisé en ce que,** lors du desserrage du dispositif de positionnement (5), le premier élément (2) peut être déplacé librement le long du second élément (3), pendant que la prise fonctionnelle du moyen de déplacement (7) et du moyen de serrage (8) dans le moyen de prise (4) est libérée, le dispositif de positionnement (5) comportant en outre un logement (6) au moins destiné à maintenir le moyen de déplacement et le moyen de serrage, le logement (6) étant disposé de préférence au moins en partie à l'intérieur du premier élément (2), et le moyen de déplacement (7) et le moyen de serrage (8) étant de préférence disposés dans le logement.

3. Ensemble selon la revendication 1 ou 2, **caractérisé en ce que** le logement (6) du dispositif de positionnement (5) peut être fixé sur le premier élément (2).

4. Ensemble selon l'une des revendications précédentes, **caractérisé en ce que** le premier élément (2) et le second élément (3) présentent un profil tubulaire avec de préférence une section transversale carrée, rectangulaire, ronde ou elliptique.

5. Ensemble selon l'une des revendications précédentes, **caractérisé en ce que** le moyen de déplacement (7) et le moyen de serrage (8) sont disposés dans le logement (6), de préférence l'un derrière l'autre dans la direction longitudinale (L) des éléments (2, 3).

6. Ensemble selon l'une des revendications précédentes, **caractérisé en ce que** le moyen de prise (4) comporte des saillies, en particulier une crémaillère, un flanc de dent des dents de la crémaillère présentant de préférence un angle inférieur à 90 degrés par rapport à la direction longitudinale (L) de la crémaillère.

7. Ensemble selon l'une des revendications précédentes, **caractérisé en ce que** le moyen de déplacement (7) et le moyen de serrage (8) coopèrent avec des évidements (9), les évidements étant disposés dans le second élément (3) ou dans un sous-élément, qui peut être inséré dans le second élément (3).

8. Ensemble selon l'une des revendications précédentes, **caractérisé en ce que** le second élément (3) comporte un guidage (10) pour le moyen de déplacement (7), de telle sorte que celui-ci peut être actionné de l'extérieur du second élément (3).

9. Ensemble selon l'une des revendications précédentes, **caractérisé en ce que** le moyen de déplacement (7) comporte un levier (11) doté de deux extrémités (11a, b) et d'un point de pivot (11 c) situé entre celles-ci, l'extrémité (11a) du levier qui coopère avec le moyen de prise (4) étant disposée d'un côté du point de pivot (11 c), et l'autre extrémité (11 b) du levier, qui comporte une surface (11 d) formée pour appliquer une force de levier, est disposée de l'autre côté du point de pivot (11c).

10. Ensemble selon l'une des revendications précédentes, **caractérisé en ce que** le moyen de serrage (8) comporte un levier (14) doté de deux extrémités (14a, b) et d'un point de pivot (14c) situé entre celles-ci, l'extrémité (14a) du levier qui coopère avec le moyen de prise (6) étant disposée d'un côté du point de pivot (14c), et l'autre extrémité (14b) du levier, qui peut être actionnée de manière à être libérée de la prise avec le moyen de prise (4) par l'application d'une force du moyen de déplacement (7), est disposée de l'autre côté du point de pivot (14c).

11. Ensemble selon l'une des revendications précédentes, **caractérisé en ce que** le dispositif de positionnement (5) comporte un moyen de commande (12), de préférence un ressort, qui est en liaison fonctionnelle avec le moyen de serrage (8) et le moyen de déplacement (7), de telle sorte que le moyen de serrage (8) et le moyen de déplacement (7) peuvent être positionnés automatiquement dans des positions prédéfinies.

12. Ensemble selon l'une des revendications précédentes, **caractérisé en ce que** le moyen de commande (12) est disposé autour d'un moyen de guidage (13), qui est disposé de préférence à l'intérieur du logement (6) du dispositif de positionnement (5).

13. Ensemble selon l'une des revendications précédentes, **caractérisé en ce que** le moyen de déplacement (7) et/ou le moyen de serrage (8) peut être tourné autour du moyen de guidage (13).

14. Ensemble selon l'une des revendications précédentes, **caractérisé en ce qu**'un élément de précontrainte, en particulier un ressort, est disposé dans au moins un des éléments (2, 3), pour faciliter le mouvement télescopique.

15. Véhicule de camping comprenant un ensemble selon l'une des revendications précédentes, dans lequel l'extrémité enroulable (31 b) du store (31) est montée sur le véhicule de camping (30) et le dispositif télescopique (1) peut être tendu entre l'extrémité libre (31 a) et l'extrémité enroulable (31 b) du store (31).
